# EUROPÄISCHE PATENTSCHRIFT

(11) **EP 1 575 740 B1**
(45) Veröffentlichungstag und Bekanntmachung des Hinweises auf die Patenterteilung: **16.01.2008**
(21) Anmeldenummer: 03775099.9
(22) Anmeldetag: 31.10.2003
(51) Int. Cl.: B24B 27/08, B24B 23/02, B23Q 11/08

(54) **ELEKTROHANDWERKZEUGMASCHINE**
ELECTRIC PORTABLE POWER TOOL
MACHINE-OUTIL ELECTRIQUE A MAIN

(30) Priorität: 19.12.2002 DE 10259520
(43) Veröffentlichungstag der Anmeldung: 21.09.2005
(73) Patentinhaber: ROBERT BOSCH GMBH, 70442 Stuttgart (DE)
(72) Erfinder: WIKER, Juergen, 70771 Leinfelden-Echterdingen (DE)
(86) Internationale Anmeldenummer: PCT/DE2003/003625
(87) Internationale Veröffentlichungsnummer: WO 2004/056529

(56) Entgegenhaltungen:
- DE-A- 10 124 439
- DE-A- 19 914 855
- DE-C- 10 115 635
- US-A- 5 163 252

## Beschreibung

### Stand der Technik

Die Erfindung geht aus von einer Elektrohandwerkzeugmaschine für ein scheibenförmiges, rotierendes Werkzeug, nach dem Oberbegriff des Anspruchs 1.

Bei solchen Elektrohandwerkzeugmaschinen hat die Schutzhaube die Aufgabe, die beim Arbeiten von dem rotierenden Werkzeug, z.B. Schleif- oder Trennscheibe, weggeschleuderten Funken und Materialpartikel vom Bediener fernzuhalten. Darüber hinaus soll die Schutzhaube auch den Benutzer im Falle einer Zerstörung des Werkzeugs schützen. Beispielsweise kommt es vor, daß bei Verkanten einer Trennscheibe im Werkstück die Trennscheibe zerbirst. In diesem Fall muß durch die Schutzhaube sichergestellt sein, daß Fragmente der zerborstenen Trennscheibe nicht in den Bereich des Bedieners gelangen. Da im allgemeinen die Schutzhaube nur einen Winkelbereich von 180° des rotierenden Werkzeugs überdeckt ist zur Sicherstellung eines ausreichenden Schutzes bei verschiedener Arbeitseinsätzen der Elektrohandwerkzeugmaschine mit unterschiedlicher Handhabung der Maschine die Schutzhaube durch Verdrehen verstellbar ausgebildet. Um die Schutzhaube in den gewünschten Bereich hinein verdrehen zu können, muß zunächst das üblicherweise als Klemmschraube ausgebildete Spannelement mittels eines Montage-Hilfswerkzeugs, z.B. Schraubendreher, gelöst werden und dann in der gewünschten Position durch Anziehen der Klemmschraube wieder so festgesetzt werden, daß die Schutzhaube sich auch bei einem Bruch des rotierenden Werkzeugs nicht unter dem Druck der weggeschleuderten Werkzeugteile auf dem Spannhals verdrehen kann. Das Einstellen der Schutzhaube ist durch das Lösen und Festziehen der Klemmschraube und des dazu benötigten Hilfswerkzeugs nicht nur umständlich, so daß häufig auf eine arbeitsgerechte Einstellung der Schutzhaube verzichtet wird, sondern führt auch langfristig zum Verschleiß an der Klemmschraube, so daß die Schutzhaube nicht mehr ausreichend fest auf dem Spannhals festgesetzt werden kann und bei einem Zerbersten des Werkzeugs keinen ausreichenden Schutz des Bedieners mehr gewährleistet.

Aus der US 5 163 252 ist eine gattungsgemäße Schutzhaube für eine Handwerkzeugmaschine bekannt mit einem scheibenförmigen, rotierenden Werkzeug und mit einem Maschinengehäuse, aus dem eine Antriebsspindel für das Werkzeug vorsteht, wobei die Schutzhaube an das Maschinengehäuse lösbar ansetzbar ist zum mindestens teilweisen Abdecken des Werkzeugs, wobei die Schutzhaube eine Spannschelle mit Spannelement aufweist, und wobei die Handwerkzeugmaschine einen am Maschinengehäuse ausgebildeten, zur Antriebsspindel koaxialen, hohlzylindrischen Spannhals hat, auf dem die Schutzhaube mittels der Spannschelle aufsetz- und festlegbar ist.

Diese bekannte Schutzhaube ist zwar axial formschlüssig auf dem Spannhals sicherbar, aber radial nur mittels kraftschlüssig wirkender Befestigungsmittel auf dem Spannhals drehfestlegbar. Dadurch kann sich die Schutzhaube bei Extrembelastungen lösen, so dass dabei der Bedienende einem hohen Sicherheitsrisiko ausgesetzt ist.

### Vorteile der Erfindung

Die erfindungsgemäße Handwerkzeugmaschine mit den Merkmalen des Anspruchs 1 hat den Vorteil, daß zum Einstellen der richtigen Drehstellung der Schutzhaube relativ zum Gehäuse kein Hilfswerkzeug benötigt wird. Das Spannelement wird nur noch bei der erstmaligen Montage der Schutzhaube dazu benutzt, eine drehbare Festlegung der Spannschelle auf dem Spannhals des Maschinengehäuses herbeizuführen. Die integrierte, manuell lösbare Verriegelung ermöglicht einerseits ein beliebiges Verdrehen der Schutzhaube in verschiedene Drehpositionen und verhindert andererseits ein Mitdrehen der Schutzhaube unter der Einwirkung wegfliegender Teile eines zerberstenden Werkzeugs. Falls durch häufiges Verstellen der Schutzhaube auf dem Spannhals oder an der Spannschelle Verschleiß auftritt, kann dieser durch Nachstellen oder Nachjustieren des Spannelements kompensiert werden. Dies macht die Schutzhaube vorteilhaft verwendbar für Elektrohandwerkzeugmaschinen mit aus Kunststoff gefertigten Spannhälsen.

Durch die in den weiteren Ansprüchen 2 - 9 aufgeführten Maßnahmen sind vorteilhafte Weiterbildungen und Verbesserungen der im Anspruch 1 angegebenen Elektrohandwerkzeugmaschine möglich.

Gemäß einer vorteilhaften Ausführungsform der Erfindung weist die manuell lösbare Verriegelung zwischen der Spannschelle an der Schutzhaube und dem Spannhals des Maschinengehäuses einen am Spannhals ausgebildeten Verzahriungsabschnitt und eine an der Spannschelle angeordnete Sperrklinke auf, die unter Federkraft in den Verzahnungsabschnitt eingreift. Die Sperrklinke ist dabei so ausgelegt, daß im Falle einer Zerstörung des rotierenden Werkzeugs eine Selbsthemmung eintritt, d. h. die Sperrklinke tiefer in die Verzahnung hineingezogen wird, und so die Verriegelung sich nicht lösen kann.

Gemäß einer vorteilhaften Ausführungsform der Erfindung weist dazu der Verzahnungsabschnitt sägezahnförmige Zähne mit steilen Zahnflanken und flachen Zahnrücken auf, wobei die hintereinander gereihten Zähne so angeordnet sind, daß die Zahnflanken in eine Richtung gegensinnig zur Drehrichtung des Werkzeugs weisen.

Gemäß einer vorteilhaften Ausführungsform der Erfindung ist die Sperrklinke an einem außen auf der Spannschelle um eine zur Spannschellenachse parallelen Schwenkachse schwenkbaren, federbelasteten Handhebel ausgebildet. Mit Abschwenken des Handhebels von der Spannschelle gegen die Rückstellkraft der Feder wird die Verriegelung aufgehoben, und die Schutzhaube kann in beiden Drehrichtungen auf dem Spannhals verdreht werden.

Gemäß einer alternativen Ausführungsform der Erfindung ist die Sperrklinke an dem in Drehrichtung des Werkzeugs weisenden, vorderen Ende einer an der Spannschelle festgelegten Federzunge ausgebildet. Die Spannschelle ist vorzugsweise aus Federstahl hergestellt, und die Spannschelle ist aus der Federzunge ausgeschnitten. In diesem Fall kann die Schutzhaube durch einfaches manuelles Drehen nur in eine Drehrichtung verstellt werden, die der Drehrichtung des Werkzeugs entgegengerichtet ist.

Gemäß einer vorteilhaften Ausführungsform der Erfindung ist die Drehhalterung der Spannschelle auf dem Spannhals durch eine umlaufend Nut-Feder-Verbindung zwischen Spannschelle und Spannhals hergestellt.

Gemäß einer bevorzugten Ausführungsform der Erfindung weist dabei die Nut-Feder-Verbindung mindestens eine in die Außenfläche des Spannhalses eingebrachte, umlaufende Ringnut und mindestens einen, von der Innenfläche der Spannschelle radial abstehenden Nocken auf, der in die Ringnut eingreift. Der Verzahnungsabschnitt für die Drehverriegelung der Schutzhaube am Maschinengehäuse ist vorteilhaft am Nutgrund der Ringnut ausgebildet, und zwar vorzugsweise über einen Drehwinkel von 180°.

Gemäß einer vorteilhaften Ausführungsform der Erfindung ist in den Außenmantel des Spannhalses mindestens eine Axialnut eingearbeitet, die einerseits in die Ringnut mündet und andererseits am freien Stirnende des Spannhalses frei ausläuft. Diese mindestens eine Axialnut ist dem mindestens einen Nocken an der Spannschelle zugeordnet, der vom freien Stirnende des Spannhalses her in die Axialnut einfahren kann. Über die Anzahl, die Lage und die Geometrie der Nocken läßt sich eine Codierung erreichen, so daß die Verwendung der Schutzhaube auf Elektrohandwerkzeugmaschinen mit gleichem Gehäuse aber unterschiedlichen Typs, z.B. mit höherer Antriebsdrehzahl, ausgeschlossen werden kann.

Eine erfindungsgemäße Schutzhaube zur Verwendung an einer Elektrohandwerkzeugmaschine ist in Anspruch 10 angegeben. Vorteilhafte Weiterbildungen und Verbesserungen der Schutzhaube sind in den weiteren Ansprüchen 11-14 angegeben.

### Zeichnung

Die Erfindung ist anhand von in der Zeichnung dargestellten
Ausführungsbeispielen in der nachfolgenden Beschreibung näher erläutert. Es zeigen:
- Fig. 1: ausschnittweise einen Längsschnitt einer Elektrohandwerkzeugmaschine mit einer daran angesetzten Schutzhaube,
- Fig. 2: eine Draufsicht in Richtung Pfeil II in Fig. 1 bei in Montagestellung verdrehter Schutzhaube,
- Fig. 3: einen Schnitt längs der Linie III - III in Fig. 1,
- Fig. 4: eine Draufsicht der Schutzhaube in Fig. 1 - 3,
- Fig. 5: eine perspektivische Ansicht einer modifizierten Schutzhaube zur Verwendung an der Elektrohandwerkzeugmaschine gemäß Fig. 1,
- Fig. 6: eine gleiche Darstellung wie in Fig. 3 der an der Elektrohandwerkzeugmaschine angesetzten Schutzhaube gemäß Fig. 5,
- Fig. 7 bis 9: jeweils einen Halbschnitt einer Schutzhaube gemäß dreier Ausführungsbeispiele,
- Fig. 10: eine Matrix von unterschiedlichen geometrische Ausbildungen des Spannhalses und der Spannschelle zur Drehalterung der Spannschelle auf dem Spannhals.

### Beschreibung der Ausführungsbeispiele

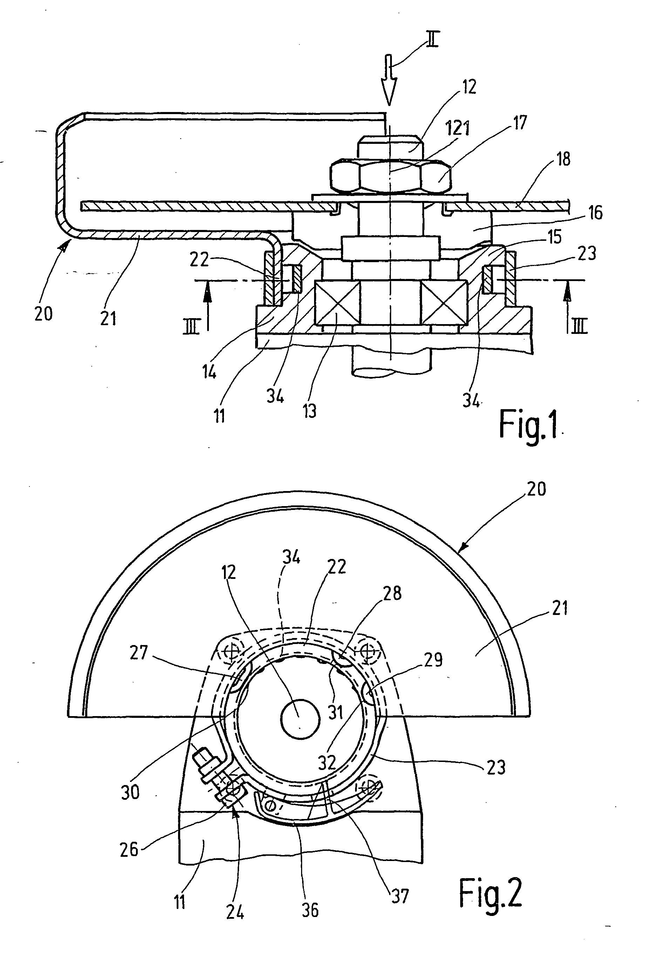

Der in Fig. 1 ausschnittweise im Längsschnitt dargestellte Trenn- oder Winkelschleifer als Ausführungsbeispiel für eine allgemeine Elektrohandwerkzeugmaschine mit einem scheibenförmigen, rotierenden Werkzeug weist ein Maschinengehäuse 11 auf, in dem ein Elektromotor aufgenommen ist, der über ein Getriebe eine aus dem Maschinengehäuse 11 vorstehende Antriebsspindel 12 antreibt. Die Antriebsspindel 12 ist nahe der Austrittsstelle aus dem Maschinengehäuse 11 mittels eines Radiallagers 13 in einem Gehäuseflansch 14 drehbar gelagert, an dem ein zur Achse 121 der Antriebsspindel 12 koaxialer, hohlzylindrischer Spannhals 15 ausgebildet ist. Auf der Antriebsspindel 12 sitzt drehfest ein Aufnahmeflansch 16, auf dem mittels einer Gewindemutter 17 eine Schleif- oder Trennscheibe 18 als Ausführungsbeispiel für ein allgemeines scheibenförmiges, rotierendes Werkzeug aufspannbar ist. Die Schleif- oder Trennscheibe 18 ist zum Schutz des Bedieners von einer Schutzhaube 20 über einen Umfang von 180° überdeckt, die vor der Montage der Schleif- oder Trennscheibe 18 an das Maschinengehäuse 11 angesetzt wird und an diesem in eine an die Maschinenhaltung durch den Bediener angepaßte Drehwinkellage verdreht werden kann.

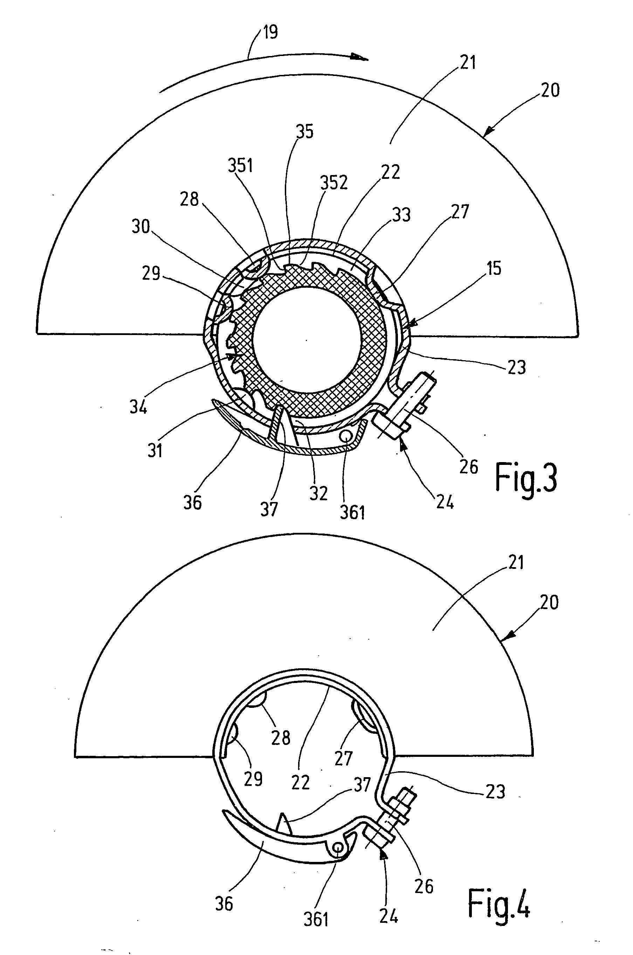

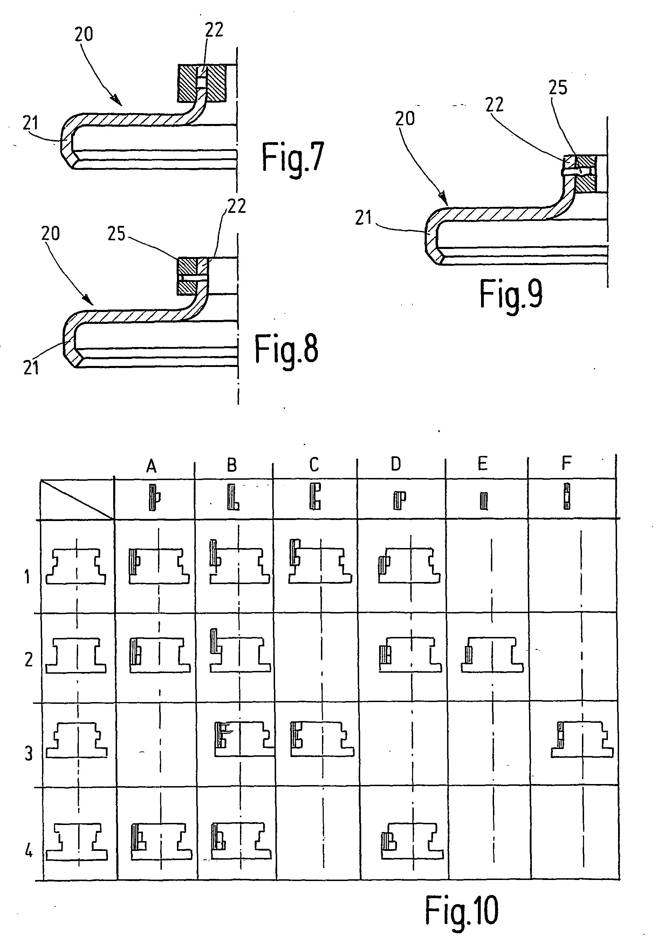

Die in Fig. 4 in Draufsicht dargestellte Schutzhaube 20, die in Fig. 1 bis 3 in Verbindung mit dem Maschinengehäuse 11 in verschiedenen Ansichten und Schnitten zu sehen ist, weist einen die Schleif- oder Trennscheibe 18 über ca. 180° Umfangswinkel überdeckenden Haubengrundkörper 21 und einen daran einstückig angeformten, zur Haubenachse konzentrischen, halbkreisförmigen Bund 22, der axial vom Haubengrundkörper 21 absteht, sowie eine Spannschelle 23 mit einem Spannelement 24 auf, die am Bund 22 befestigt ist. Der Haubengrundkörper 21 mit Bund 22 ist vorzugsweise aus Stahlblech hergestellt, kann aber auch aus Kunststoff oder Glasfaserverbundwerkstoff gefertigt sein. Die Spannschelle 23 ist aus Kunststoff oder als Blechbiegelteil aus Stahl gefertigt. Die Kunststoff-Spannschelle 23 wird, wie dies in Fig. 7 dargestellt ist, durch Umspritzen am Bund 22 befestigt. Die Stahl-Spannschelle 23 wird am Bund 22 durch Schrauben, Nieten oder Schweißen befestigt, wobei die Spannschelle 23 - wie in Fig. 8 dargestellt ist -den Bund 22 umgreift oder - wie in Fig. 9 dargestellt ist - von dem Bund 22 umgriffen ist. In Fig. 8 und 9 ist jeweils eine Nietverbindung zwischen Bund 22 und Spannschelle 23 dargestellt. Der Niet ist mit 25 gekennzeichnet.

Die Spannschelle 23 ist geteilt ausgeführt, wobei die an der Schnittstelle liegenden Enden zu radial abstehenden Lappen abgebogen sind, die durch das als Stellschraube 26 ausgeführte Spannelement 24 miteinander verbunden sind. Auf der Innenfläche der Spannschelle 23 sind drei voneinander in Umfangsrichtung beabstandete Nocken 27, 28, 29 ausgebildet, die mit jeweils einer von drei in den Spannhals 15 im gleichen Abstand eingearbeiteten Axialnuten 30, 31, 32 korrespondieren (Fig. 2 und 3). Die Axialnuten 30, 31, 32 münden einerseits in einer auf der Außenfläche des Spannhalses 15 eingebrachten Ringnut 33 und laufen andererseits an der freien Stirnseite des Spannhalses 15 frei aus. Zum Aufsetzen der Schutzhaube 20 auf den Spannhals 15 ist die Schutzhaube 20 in eine solche Drehposition zu bringen, daß die Nocken 27 - 29 mit den Axialnuten 30 - 32 übereinstimmen. Dann wird die Schutzhaube 20 axial soweit auf den Spannhals 15 aufgeschoben, bis die Nocken 27 in die Ringnut 33 eintauchen. Die Stellschraube 26 wird nunmehr soweit festgedreht, daß die Spannschelle 23 spielfrei aber drehbar auf dem Spannhals 15 sitzt. Die Nocken 27 - 29 und die Ringnut 33 stellen eine Nut-Feder-Verbindung dar, die verhindert, daß die Schutzhaube 20 in axialer Richtung von dem Spannhals 15 abziehbar ist, ausgenommen in der einen Drehstellung, in welcher die Nocken 27 - 29 mit den Axialnuten 30 - 32 in Achsrichtung fluchten. Über die Form, die Anzahl und die Lage der Nocken 27 - 29 läßt sich eine Codierung realisieren, so daß bestimmte Schutzhaubenausführungen nur an bestimmten Elektrohandwerkzeugmaschinen angesetzt werden können. Für eine einfache Codierung für wenige Kombinationen von Elektrohandwerkzeugmaschinen und Schutzhauben ist ein einziger Nocken ausreichend.

Zur Festlegung der auf dem Spannhals 15 des Maschinengehäuses 11 drehbar gehaltenen Schutzhaube 20 in einer für eine gewünschte Arbeitsposition erforderlichen Drehlage zum Maschinengehäuse 11 ist zwischen den Spannhals 15 und der Spannschelle 23 eine manuell lösbare Verriegelung ausgebildet, mittels welcher die Schutzhaube 20 in mehreren, definierten Relativdrehlagen zum Spannhals 15 arretierbar ist. Hierzu ist, wie in der Schnittdarstellung der Fig. 3 zu sehen ist, im Nutgrund der Ringnut 33 ein Verzahnungsabschnitt 34 ausgebildet, der sich etwa über 180° Umfangswinkel der Ringnut 33 erstreckt. Der Verzahnungsabschnitt 34 hat eine Mehrzahl von hintereinander angeordneten, sägezahnförmigen Zähnen 35, die jeweils eine steile Zahnflanke 351 und einen zur Zahnflanke 351 des nächsten Zahns 35 hin flach abfallenden Zahnrücken 352 aufweisen. Die Zähne 35 sind dabei so angeordnet, daß die steilen Zahnflanken 351 in eine Drehrichtung weisen, die entgegengesetzt ist zur Rotationsrichtung 19 der Schleif- oder Trennscheibe 18. Außen auf der Spannschelle 23 ist ein federbelasteter Handhebel 36 schwenkbar angeordnet, wobei sich dessen Schwenkachse 361 parallel zur Haubenachse erstreckt. Im Abstand von der Schwenkachse 361 steht von dem Handhebel 36 eine Sperrklinke 37 etwa radial nach innen ab, die durch eine Ausnehmung in der Spannschelle 23 hindurch in die Ringnut 33 im Spannhals 15 hineinragt und dort mit dem Verzahnungsabschnitt 34 zur Arretierung der Schutzhaube 20 zusammenwirkt. Nach dem vorstehend beschriebenen Aufsetzen der Schutzhaube 20 in der Montagestellung, in der die Nocken 27 - 29 mit den Axialnuten 30 - 32 fluchten (Fig. 2), auf den Spannhals 15 wird die Schutzhaube 20 verdreht, wobei die Sperrklinke 37 in den ersten Zahn 35 des Verzahnungsabschnitts 34 einfällt, wie dies in Fig. 3 dargestellt ist. Die Verrastung erfolgt durch eine in Radialrichtung wirkende Federkraft, wobei die am Handhebel 36 angreifende Feder in Fig. 3 und 4 nicht dargestellt ist. Wird eine andere Drehposition der Schutzhaube 20 gewünscht, so muß der Handhebel 36 etwas von der Spannschelle 23 abgeschwenkt werden, bis die Sperrklinke 37 aus dem Verzahnungsabschnitt 34 aushebt. Die Schutzhaube 20 kann nun beliebig in beide Drehrichtungen verdreht werden. Sobald der Handhebel 36 wieder losgelassen wird drückt die gespannte Feder die Sperrklinke 37 wieder in die Verzahnung, und die Schutzhaube 20 ist in der neuen Drehposition sicher verriegelt. Die so hergestellte Verriegelung der Schutzhaube 20 wirkt in Drehrichtung der Schleif- oder Trennscheibe 18, so daß bei deren Zerbersten ein Mitdrehen der Schutzhaube 20 sicher verhindert ist.

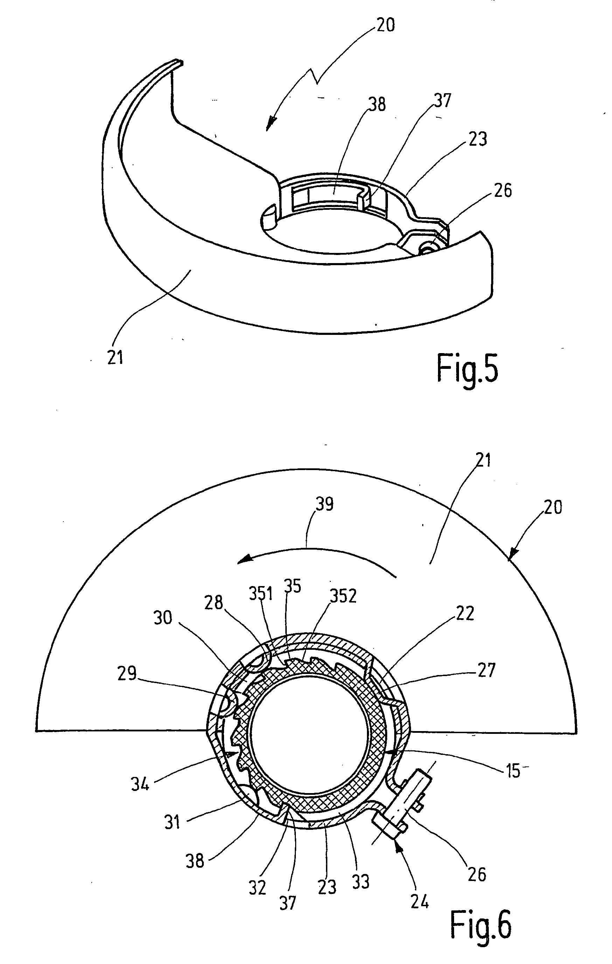

Bei der in Fig. 5 und in Verbindung mit dem Spannhals 15 des Maschinengehäuses 11 in Fig. 6 dargestellten, modifizierten Schutzhaube 20 ist die Sperrklinke 37 an einer an der Spannschelle 23 festgelegten Federzunge 38 festgelegt, und zwar an dem in Drehrichtung der Schleif- oder Trennscheibe 18 weisenden, vorderen Ende der Federzunge 38. Die Federzunge 38 wird bevorzugt aus der Spannschelle 23 ausgeschnitten, die hierzu aus Federstahl hergestellt wird. Die nach innen gerichtete Vorspannung der Federzunge 38 drückt die Sperrklinke 37 in den Verzahnungsabschnitt 34. Die Sperrklinke 37 liegt an der steilen Zahnflanke 351 eines Zahns 35 an, so daß ein Mitdrehen der Schutzhaube 20 bei einem evtl. Zerbersten der Schleif- oder Trennscheibe 18 durch die weggeschleuderten Teile sicher verhindert ist. Die Schutzhaube 20 kann in diesem Fall natürlich nur in Pfeilrichtung 39 in Fig. 6, also entgegen der Drehrichtung 19 der Schleif- oder Trennscheibe 18, verdreht werden, um in eine andere gewünschte Drehlage gebracht zu werden.

In den beiden vorstehend beschriebenen Ausführungsbeispielen der Elektrohandwerkzeugmaschine mit Schutzhaube 20 sind zur Drehhalterung der Schutzhaube 20 auf dem Spannhals 15 des Maschinengehäuses 11, also zum Verhindern des axialen Abfallens der Schutzhaube 20 vom Spannhals 15 , die Nocken 27 - 29 mittig in der Spannschelle 23 angeordnet und ebenso die Ringnut 33, in die die Nocken 27 - 29 eingreifen, mittig im Spannhals 15 ausgebildet (Fig. 1). Es gibt jedoch noch weitere Möglichkeiten der Spannschellen- und Spannhalsgeometrie, um diese Drehhalterung der Schutzhaube 20 zu erreichen. In Fig. 10 ist hierzu eine Matrix dargestellt, bei welcher in Zeile X jeweils ein Teilschnitt der Spannschelle 23 mit unterschiedlicher Nockenbelegung und in Spalte Y verschiedene geometrische Gestaltungen einer oder mehrerer Ringnuten 33 im Spannhals 15 dargestellt sind. Die Kombination der Spannelementvarianten A - F mit den Spannhalsvarianten 1 - 4 ergibt die in der Matrix dargestellten verschiedenen Zuordnungen von Ringnut und Nocken, die alle eine sichere Drehhalterung der Schutzhaube 20 auf den Spannhals 15 ergeben. Die Bilder sind selbsterklärend, so daß auf eine weitergehende Beschreibung verzichtet und lediglich auf wenige Beispiele hingewiesen wird.

So ist beispielsweise bei der Spannhalsgeometrie in Zeile 2 der Matrix die axiale Breite der Ringnut größer als die axiale Breite des zugeordneten Nockens, und der Nutgrund weist einen konstanten Durchmesser auf. Die axiale Lage des Nockens ist so getroffen, daß sich der Nocken an die dem Stirnende des Spannhalses naheliegende ringförmige Nutwand anlegt (Matrixkombinationen A/2, B/2 und D/2)

In einem weiteren Ausführungsbeispiel ist der Nutgrund der Ringnut mit gestuftem Durchmesser ausgeführt (Spannhalsgeometrie Zeile 1). Weist die Spannschelle die Nockengeometrie gemäß A oder B auf, so ergibt sich eine Zuordnung von Spannschelle zum Spannhals gemäß den Kombinationen A/1, B/1 und D/1. Sind an der Spannschelle Nocken in parallelen Reihen ausgebildet (Nockengeometrie Spalte C) so ergibt ich bei der im Durchmesser gestuften Ausbildung des Nutgrunds (Spannhalsgeometrie Zeile 1) die in C/1 dargestellte Zuordnung von Spannschelle und Spannhals.

In dem Ausführungsbeispiel der Spannschelle in Spalte E ist auf eine Nockenausbildung verzichtet. Die Spannschelle selbst bildet die Feder der Nut-Feder-Verbindung zwischen Spannschelle und Spannhals, wobei die Ringnut mit einer der Spannschelle entsprechenden Nutbreite ausgeführt ist.

Bei der in Spalte F skizzierten Spannschelle in Verbindung mit der Spannhalsgeometrie in Zeile 3 ist die Nut-Feder-Verbindung zwischen Spannschelle und Spannhals durch Vertauschen von Nut und Feder herbeigeführt. Die Spannschelle weist eine die Nut bildende mittige Ausnehmung auf, die sich beispielsweise über 180° erstreckt. Auf dem Spannhals ist ein entsprechender Ringsteg ausgebildet, der in die Ausnehmung hineinragt.

## Patentansprüche

1. Handwerkzeugmaschine für ein scheibenförmiges, rotierendes Werkzeug (18) mit einem Maschinengehäuse (11), aus dem eine Antriebsspindel (12) für das Werkzeug (18) vorsteht, mit einer an das Maschinengehäuse (11) lösbar angesetzten Schutzhaube (20) zum mindestens teilweisen Abdecken des Werkzeugs (18), die eine Spannschelle (23) mit Spannelement (24) aufweist, und mit einem am Maschinengehäuse (11) ausgebildeten, zur Antriebsspindel (12) koaxialen, hohlzylindrischen Spannhals (15), auf dem die Schutzhaube (20) mittels der Spannschelle (23) aufsetz- und festlegbar ist, wobei die Spannschelle (23) drehbar auf dem Spannhals (15) gehalten ist und zwischen Spannschelle (23) und Spannhals (15) eine manuell lösbare Verriegelung so ausgebildet ist, dass die Schutzhaube (20) in mehreren definierten Retativdrehlagen zum Spannhals (15) arretierbar ist, **dadurch gekennzeichnet, dass** die manuell lösbare Verriegelung einen am Spannhals (15) ausgebildeten Verzahnungsabschnitt (34) und eine an der Spannschelle (23) angeordnete Sperrklinke (37) aufweist, die durch Federkraft in den Verzahnungsabschnitt (34) eindrückbar ist und wobei der Verzahnungsabschnitt (34) sägezahnförmige Zähne (35) mit steilen Zahnflanken (351) und flach abfallenden Zahnrücken (352) aufweist und dass die hintereinander liegenden Zähne (35) so angeordnet sind, dass die Zahnflanken (351) in eine der Drehrichtung (19) des Werkzeugs (18) entgegen gerichtete Richtung weisen.

2. Handwerkzeugmaschine nach Anspruch 1, **dadurch gekennzeichnet, dass** die Sperrklinke (37) an einem außen auf der Spannschelle (23) um eine zur Spannschellenachse parallelen Schwenkachse (361) schwenkbaren, federbelasteten Handhebel (36) ausgebildet ist.

3. Handwerkzeugmaschine nach Anspruch 1 oder 2, **dadurch gekennzeichnet, dass** die Sperrklinke (37) an dem in Drehrichtung (19) des Werkzeugs (18) weisenden, vorderen Ende einer an der Spannschelle (23) festgelegten Federzunge (38) ausgebildet ist, die vorzugsweise aus der aus Federstahlblech hergestellten Spannschelle (23) ausgeschnitten ist.

4. Handwerkzeugmaschine nach einem der Ansprüche 1 - 3, **dadurch gekennzeichnet, dass** zur Drehhalterung der Spannschelle (23) auf dem Spannhals (15) zwischen Spannschelle (23) und Spannhals (15) eine umlaufende Nut-Feder-Verbindung hergestellt ist

5. Handwerkzeugmaschine nach Anspruch 4, **dadurch gekennzeichnet, dass** die Nut-Feder-Verbindung mindestens eine in die Außenfläche des Spannhalses (15) eingebrachte Ringnut (33) und mindestens einen von der Innenfläche der Spannschelle (23) radial abstehenden, in die Ringnut (33) eingreifenden Nocken (27-29) aufweist und dass der Verzahnungsabschnitt (34) am Nutgrund der Ringnut (33), vorzugsweise über einen Drehwinkel von 180°, ausgebildet ist.

6. Handwerkzeugmaschine nach Anspruch 5, **dadurch gekennzeichnet, dass** in den Außenmantel des Spannhalses (15) mindestens eine Axialnut (30, 32) eingearbeitet ist, die einerseits In der Ringnut (33) mündet und andererseits am freien Stirnende des Spannhalses (15) frei ausläuft und die dem mindestens einen Nocken (27, 29) an der Spannschelle (23) zugeordnet ist.

7. Handwerkzeugmaschine nach einem der Ansprüche 1-6, **dadurch gekennzeichnet, dass** die Spannschelle (23) an einem halbkreisförmigen, axial abstehenden Bund (22) der Schutzhaube (20) durch Umspritzen, Schrauben, Schwei-βen oder Nieten befestigt ist.

## Claims

1. Portable power tool for a disc-shaped, rotating tool (18), having a machine housing (11), from which a drive spindle (12) for the tool (18) projects, having a protective hood (20) which is releasably attached to the machine housing (11) and is intended for at least partly covering the tool (18) and which has a clamp (23) with a clamping element (24), and having a hollow-cylindrical clamping neck (15) which is formed on the machine housing (11) and is coaxial to the drive spindle (12) and on which the protective hood (20) can be mounted and secured by means of the clamp (23), the clamp (23) being held on the clamping neck (15) in a rotatable manner and a manually releasable locking means being formed between clamp (23) and clamping neck (15) in such a way that the protective hood (20) can be locked in a plurality of defined rotary positions relative to the clamping neck (15), **characterized in that** the manually releasable locking means has a toothed section (34) formed on the clamping neck (15) and a pawl (37) which is arranged on the clamp (23) and can be pressed into the toothed section (34) by spring force, and the toothed section (34) having saw-tooth-shaped teeth (35) with steep tooth flanks (351) and tooth backs (352) falling away at a small angle, and **in that** the teeth (35) lying one behind the other are arranged in such a way that the tooth flanks (351) point in a direction opposed to the direction of rotation (19) of the tool (18).

2. Portable power tool according to Claim 1,
**characterized in that** the pawl (37) is formed on a spring-loaded hand lever (36) which is pivotable on the outside of the clamp (23) about a pivot axis (361) parallel to the clamp axis.

3. Portable power tool according to Claim 1 or 2, **characterized in that** the pawl (37) is formed on the front end, pointing in the direction of rotation (19) of the tool (18), of a spring tongue (38) which is secured to the clamp (23) and is preferably cut out of the clamp (23) made of spring steel sheet.

4. Portable power tool according to one of Claims 1 to 3, **characterized in that** a circumferential tongue-and-groove connection is produced in order to rotationally secure the clamp (23) on the clamping neck (15).

5. Portable power tool according to Claim 4,
**characterized in that** the tongue-and-groove connection has at least one annular groove (33) incorporated in the outer surface of the clamping neck (15) and at least one lug (27-29) projecting radially from the inner surface of the clamp (23) and engaging in the annular groove (33), and **in that** the toothed section (34) is formed on the groove root of the annular groove (33), preferably over an angle of rotation of 180°.

6. Portable power tool according to Claim 5,
**characterized in that** at least one axial groove (30, 32) is incorporated in the outer lateral surface of the clamping neck (15), which axial groove (30, 32) opens out in the annular groove (33) on the one hand and runs out freely at the free end face of the clamping neck (15) on the other hand and is assigned to the at least one lug (27, 29) on the clamp (23).

7. Portable power tool according to one of Claims 1 to 6, **characterized in that** the clamp (23) is fastened to a semicircular, axially projecting collar (22) of the protective hood (20) by encapsulation, screwing, welding or riveting.

## Revendications

1. Machine-outil à main pour un outil rotatif (18) en forme de disque, comportant un boîtier de machine (11) dont dépasse une broche d'entraînement (12) pour l'outil (18), un capot de protection (20) fixé de manière amovible au boîtier (11) de la machine pour couvrir au moins en partie l'outil (18), ce capot ayant un collier de serrage (23) muni d'un élément de serrage (24) et un col de serrage (15) cylindrique creux, coaxial à l'axe d'entraînement (12), réalisé sur le boîtier (11) de la machine, le capot de protection (20) se montant et se fixant sur ce col de serrage à l'aide de son collier (23),
le collier de serrage (23) étant tenu à rotation sur le col de serrage (15) et un verrouillage desserrable à la main est réalisé entre le collier de serrage (23) et le col de serrage (15),
le capot de protection (20) pouvant être bloqué dans plusieurs positions de rotation relatives, définies par rapport au col de serrage (15),
**caractérisée en ce que**
le verrouillage libérable à la main comprend un segment denté (34) réalisé sur le col de serrage (15) et un verrou (37) faisant partie du collier de serrage (23), ce verrou étant enfoncé par la force d'un ressort dans le segment denté (34) et
le segment denté (34) comporte des dents (35) en forme de dents de scie avec des flancs raides (351) et des dos descendant à plat (352),
les dents (35) étant prévues les unes derrière les autres de façon que les flancs de dents (351) soient tournés dans la direction opposée à celle du sens de rotation (19) de l'outil (18).

2. Machine-outil à main selon la revendication 1,
**caractérisée en ce que**
le verrou (37) est réalisé sur un levier à main (36) chargé par un ressort, pivotant extérieurement par rapport au collier de serrage (23) autour d'un axe de pivotement (351) parallèle à l'axe du collier de serrage.

3. Machine-outil à main selon la revendication 1 ou 2,
**caractérisée en ce que**
le verrou (37) est réalisé, au niveau de son extrémité avant tournée dans le sens de rotation (19) de l'outil (18), sous la forme d'une languette élastique (38) fixée au collier de serrage (23), cette languette étant de préférence constituée par un collier de serrage (23) réalisé en un acier à ressort.

4. Machine-outil à main selon l'une des revendications 1 à 3,
**caractérisée en ce que**
le support de rotation du collier de serrage (23) sur le col de serrage (15) est réalisé sous la forme d'une liaison périphérique à rainure et longuette entre le collier (23) et le col de serrage (15).

5. Machine-outil à main selon la revendication 4,
**caractérisée en ce que**
la liaison par languette et rainure comporte au moins une rainure annulaire (33) réalisée dans la surface extérieure du col de serrage (15) et
au moins une came (27-29) radialement en saillie par rapport à la surface intérieure du collier de serrage (23) et pénétrant dans la rainure annulaire (33), et
le segment denté (34) est réalisé au fond de la rainure annulaire (33), de préférence suivant un angle de 180°.

6. Machine-outil à main selon la revendication 5,
**caractérisée en ce que**
l'enveloppe extérieure du col de serrage (15) comporte au moins une rainure axiale (30, 32) qui, d'une part, débouche dans le collier annulaire (33), et, d'autre part, se termine librement au niveau de l'extrémité frontale libre du col de serrage (15) et qui est associée à au moins une came (27, 29) du collier de serrage (23).

7. Machine-outil à main selon l'une des revendications 1 à 6,
**caractérisée en ce que**
le collier de serrage (23) est fixé à un bossage (22) axialement en saillie du capot de protection (20), en forme de demi-cercle, réalisé par surmoulage, vissage, soudage ou rivetage.
